(19) **Europäisches Patentamt / European Patent Office / Office européen des brevets**

(11) **EP 4 107 673 B1**

(12) **EUROPEAN PATENT SPECIFICATION**

(45) Date of publication and mention of the grant of the patent:
**11.02.2026 Bulletin 2026/07**

(21) Application number: **21756243.8**

(22) Date of filing: **27.01.2021**

(51) International Patent Classification (IPC):
**G06N 7/08** (2006.01)        **G06F 30/23** (2020.01)
**G05B 23/02** (2006.01)        **G06N 7/01** (2023.01)
**G06F 119/04** (2020.01)        **G06N 20/00** (2019.01)

(52) Cooperative Patent Classification (CPC):
**G05B 23/0283; G06F 30/23; G06N 7/01; G06N 20/00;** G06F 2119/04

(86) International application number:
**PCT/MY2021/050004**

(87) International publication number:
**WO 2021/167443 (26.08.2021 Gazette 2021/34)**

(54) **EQUIPMENT FAILURE PROBABILITY CALCULATION AND LIFETIME ESTIMATION METHODS AND SYSTEMS**

VERFAHREN UND SYSTEME ZUR FEHLERWAHRSCHEINLICHKEITSBERECHNUNG UND ZUR LEBENSDAUERSCHÄTZUNG EINES GERÄTS

CALCUL DE PROBABILITÉ DE DÉFAILLANCE D'ÉQUIPEMENT ET PROCÉDÉS ET SYSTÈMES D'ESTIMATION DE DURÉE DE VIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.02.2020 MY PI2020000840**

(43) Date of publication of application:
**28.12.2022 Bulletin 2022/52**

(73) Proprietor: **Petroliam Nasional Berhad (Petronas)
50088 Kuala Lumpur (MY)**

(72) Inventors:
• **A. DZUBIR, Faizul Azly B.**
**Kuala Lumpur, 50088 (MY)**
• **AYOB, M. Adnan B.**
**Kuala Lumpur, 50088 (MY)**
• **OTHMAN, A. Rahim B.**
**Perak Darul Ridzuan, 32610 (MY)**

(74) Representative: **Marks & Clerk LLP
15 Fetter Lane
London EC4A 1BW (GB)**

(56) References cited:
EP-A1- 1 598 749        US-A1- 2016 246 287
US-A1- 2016 246 287        US-A1- 2017 308 633
US-A1- 2019 080 040        US-B2- 8 290 753

• **B. SUDRET: "Chapter 6: Polynomial chaos expansions and stochastic finite-element methods", 30 November 2014, RISK AND RELIABILITY IN GEOTECHNICAL ENGINEERING, CRC PRESS, US, PAGE(S) 265 - 300, ISBN: 978-1-4822-2721-5, XP009530674**
• **PHOON, KOK-KWANG: "Risk and Reliability in Geotechnical Engineering", 2015, CRC PRESS, US, ISBN: 978-1-4822-2721-5, article BRUNO SUDRET: "Chapter 6: Polynomial chaos expansions and stochastic nite-element methods", pages: 265 - 300, XP009530674**

Processed by Luminess, 75001 PARIS (FR)

## EP 4 107 673 B1

**Description**

TECHNICAL FIELD

The present disclosure relates to equipment lifetime assessments and reliability management and in particular the processing of real-time parameters to calculate the probability of failure and remaining lifespan for equipment such as heat exchangers.

BACKGROUND

Conventional equipment health monitoring for mechanical damage typically utilizes non-destructive testing inspection during plant shutdown. This data will be coupled with fitness for service (FFS) to predict equipment life. However, this prediction comes with certain inaccuracy and uncertainties as it typically based on assumptions such as future production parameters, as well as material non-linearity.

US 2016/246287 describes technologies for evaluating the design of a turbomachinery component for risk of failure due to high cycle fatigue via test data developed as a result of simulations executed by high fidelity aeromechanics models towards the development of a probabilistic Goodman diagram.

B. Sudret: "Chapter 6: Polynomial chaos expansions and stochastic finite-element methods", 30 November 2014, in "Risk and Reliability in Geotechnical Engineering" gives an overview on stochastic finite-element analysis using polynomial chaos expansions, focusing more specifically on nonintrusive computation schemes.

SUMMARY

According to a first aspect of the present disclosure a method of calculating a probability of failure of an equipment component is provided as recited in claim 1.

The embodiments of the present invention offer real time prediction of mechanical damage. The probability of failure of equipment based on crack extension will subsequently enable the prediction of remaining equipment life span.

Embodiments of the present invention enable the capture of the non-linearity of real-time process parameter changes to provides accurate prediction compared to manual linear prediction of inspection data. The real time prediction is a must-have technology for asset owners to make plant decisions, such as planned shut down or ramp up the process parameter at desire level.

Results from analysis for early crack detection indicatively trigger the notification for potential through-crack, potentially eliminating incidents such as Loss of Primary Containment (LOPC) to environment. In-situ data on material condition and processing parameters would assist in more accurate life assessment and reliability analysis of specific equipment lifespan.

This information helps to optimize maintenance resources, estimated repair costs, maintenance culture change from preventive to proactive mode that led to smooth turnaround activities without delay in schedule.

In an embodiment calculating a probability of failure of the equipment component comprises calculating a probability density function.

In an embodiment the method further comprises estimating a remaining lifetime of the equipment component using the probability density function.

In an embodiment the operating parameters of the equipment component comprise temperature and / or pressure.

In an embodiment the device properties of the equipment component comprise dimensions and / or material properties.

In an embodiment the method further comprises receiving acoustic emission parameters corresponding to the equipment component and determining a correlation between the acoustic emission parameters and strain to deduce a level of damage of the equipment component.

Embodiments of the present invention combine acoustic emission (AE) bespoke Data Acquisition system with integrated data filtering algorithm, and feature analytics for interpretation of induced waveforms signal from field environment. The relationships between AE absolute energy rate and crack behaviour are developed based on series of experimental testing, finite element analysis and pilot testing. Correlation between AE signal characteristics with crack initiation and crack growth, and coupled with Polynomial Chaos Expansion (PCE) probabilistic algorithm, provides a digital twin methodology for damage prediction at site.

In an embodiment using the finite element model of the equipment component to construct a polynomial basis for a polynomial chaos expansion comprises generating training data samples using the finite element model of the equipment component.

In an embodiment the polynomial basis is a Hermite polynomial basis.

According to a second aspect of the present disclosure, a data processing system for calculating a probability of failure of an equipment component is provided as recited in claim 9.

Embodiments of the invention may be provided as a software application downloadable into a computer device to facilitate the method. The software application may be a computer program product, which may be stored on a non-transitory computer-readable medium on a tangible data-storage device (such as a storage device of a server, or one within a user device).

BRIEF DESCRIPTION OF THE DRAWINGS

In the following, embodiments of the present invention will be described as nonlimiting examples with reference to the accompanying drawings in which:

FIG.1 shows an equipment component for which analysis is carried out in embodiments of the present invention;

FIG.2 is a block diagram showing a data processing system according to an embodiment of the present invention;

FIG.3 is a flow chart showing a method of calculating a probability of failure of an equipment component according to an embodiment of the present invention;

FIG.4 is a process flow diagram showing a method of calculating a probability density function and a probability of failure according to an embodiment of the present invention;

FIG.5 is a flow chart showing a method of generating a probability density function according to an embodiment of the present invention; and

FIG.6 shows graphs of a probability density function and a probability of failure calculated according to embodiments of the present invention.

DETAILED DESCRIPTION

The present disclosure relates to systems and methods for calculating probability of failure and estimating the remaining lifespan of equipment. It is envisaged that the methods and systems described herein are applicable to calculating probability of failure and estimating the remaining lifespan of variety of types of equipment and equipment components including static equipment made from metallic and non-metallic materials covering pressure vessels, furnaces, heat exchangers, storage tanks, Column, Flare Stacks, Air-fin coolers, rotating equipment covering all types of centrifugal pumps and compressors, reciprocating pumps and compressors, turbines, generators, blowers etc., piping and pipeline components made from metallic and non-metallic consist of pipe fittings, valves, flanges, strainers etc.

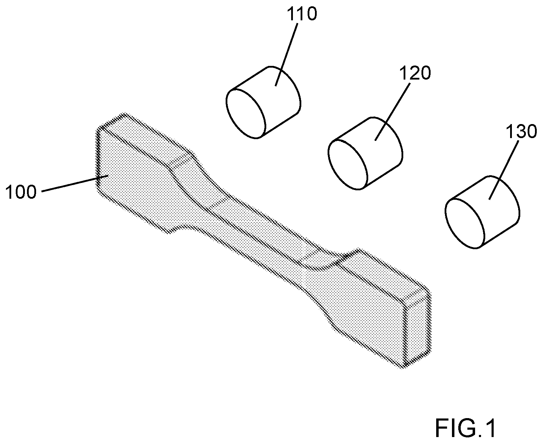

The calculations are based on device properties of the equipment components, operating parameters of the equipment component and in some cases, acoustic emission data from the equipment component. The input data and sensed data is explained in more detail below with reference to FIG.1.

FIG.1 shows an equipment component for which analysis is carried out in embodiments of the present invention. The equipment component 100 is formed from a material which has known properties and the equipment component 100 has known dimensions. Together the material properties and the dimensions of the equipment component are referred to as the device properties of the equipment component 100. As shown in FIG.1, sensors are arranged to measure operating parameters of the equipment component. FIG.1 shows a temperature sensor 110, a pressure sensor 120 and an acoustic emission sensor 130 arranged to measure, respectively, the operating temperature, the operating pressure and acoustic emissions of the equipment component 100. Parameters such as the operating temperature and the operating pressure of the equipment component are referred to as the operating parameters of the equipment component 100.

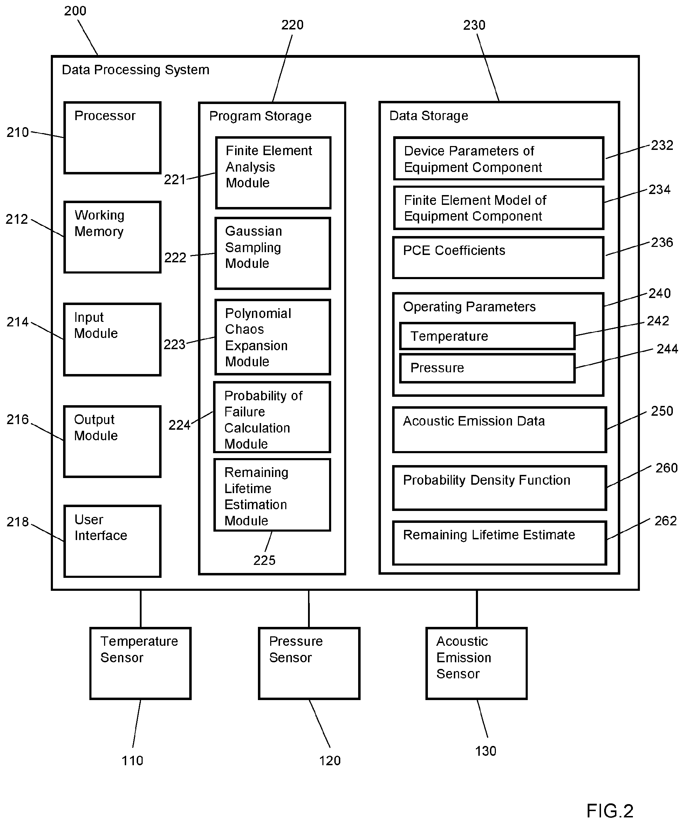

FIG.2 shows a data processing system according to an embodiment of the present invention. The data processing system 200 is a computer system with memory that stores computer program modules which implement methods calculating a probability of equipment failure and estimating a remaining lifetime of equipment according to embodiments of the present invention.

The data processing system 200 comprises a processor 210, a working memory 212, an input module 214, an output module 216, a user interface 218, program storage 220 and data storage 230. The processor 210 may be implemented as one or more central processing unit (CPU) chips. The program storage 220 is a non-volatile storage device such as a hard disk drive which stores computer program modules. The computer program modules are loaded into the working memory 212 for execution by the processor 210. The input module 214 is an interface which allows data. The output module 216 is an output device which allows data to be output. The output module 216 may be coupled to display device or a printer. The user interface 218 allows a user of the data processing system 200 to input selections and commands and may be implemented as a graphical user interface.

The program storage 220 stores a finite element analysis module 221, a Gaussian sampling module 222, a polynomial chaos expansion module 223, a probability of failure calculation module 224 and a remaining lifetime calculation module 225. The computer program modules cause the processor 210 to execute probability of failure and remaining lifetime estimation data processing which is described in more detail below. The program storage 220 may be referred to in some contexts as computer readable storage media and/or non-transitory computer readable media. As depicted in FIG.2, the computer program modules are distinct modules which perform respective functions implemented by the data processing system 200. It will be appreciated that the boundaries between these modules are exemplary only, and that alternative embodiments may merge modules or impose an alternative decomposition of functionality of modules. For example, the modules discussed herein may be decomposed into sub-modules to be executed as multiple computer processes, and, optionally, on multiple computers. Moreover, alternative embodiments may combine multiple instances of a particular module or sub-module. It will also be appreciated that, while a software implementation of the computer program modules is described herein, these may alternatively be implemented as one or more hardware modules (such as field-programmable gate array(s) or application-specific integrated circuit(s)) comprising circuitry which implements equivalent functionality to that implemented in software.

The data processing system 200 is coupled to the temperature sensor 110, the pressure sensor 120 and the acoustic emission sensor 130 shown in FIG.1. the temperature sensor 110, the pressure sensor 120 and the acoustic emission sensor 130 may be coupled to the input module 214 of the data processing system 200.

The data storage 230 stores various data relating to the equipment component 100, the operation of the equipment component 100 and data calculated by the data processing system 200. The data storage 230 stores device parameters of the equipment component 232, a finite element model of the equipment component 234, polynomial chaos expansion (PCE) coefficients 236, operating parameters 240 of the equipment component 100, acoustic emission data 250, a probability density function 260 and a remaining lifetime estimate 262.

The device parameters of the equipment component 232 comprise dimensions of the equipment component and details of the material or materials that the equipment component is made from. The device parameters 232 may include design parameters of the equipment component. The finite element model of the equipment component 234 discretized model of the equipment component generated by the finite element analysis module 221. The PCE coefficients are coefficients for a polynomial chaos expansion which models the stress and strain in the equipment component.

The operating parameters 240 comprise temperature 242 and pressure 244 measurement data which are measured by the temperature sensor 110 and the pressure sensor 120 respectively. In some embodiments, the operating parameters 240 are processed in real time or near real time as measured by the respective sensors.

The acoustic emission data 250 is acoustic emission signal data captured by the acoustic emission sensor 130 from the equipment component 100.

The probably density function 260 indicates the probability of failure of the equipment component against time and is calculated by the probability of failure calculation module 224. The remaining lifetime estimate is an estimate of the remaining lifetime of the equipment component calculated by the remaining lifetime calculation module 225.

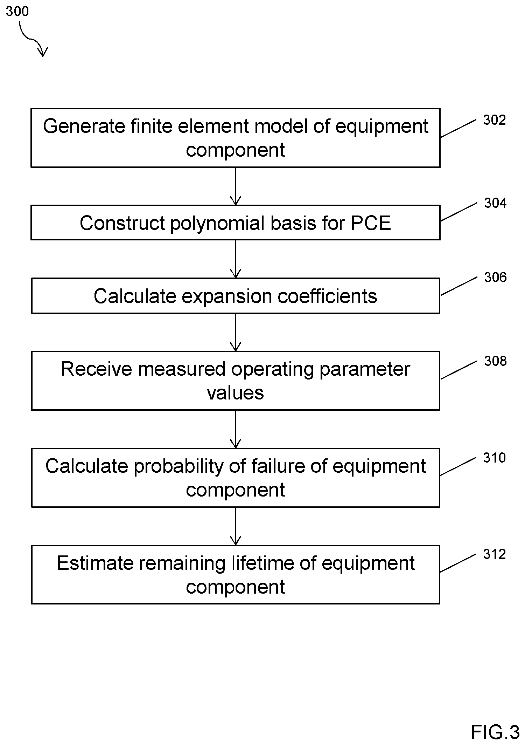

FIG.3 shows a method of calculating a probability of failure of an equipment component according to an embodiment of the present invention. The method 300 is carried out by the data processing system 200 shown in FIG.2.

In step 302, the finite analysis module 221 of the data processing system 200 generates a finite element model of the equipment component 234. The finite analysis model is generated based on the device properties of the equipment component 232.

In step 304, the polynomial chaos expansion module 223 of the data processing system 200 constructs a polynomial basis for a polynomial chaos expansion (PCE). In some embodiments, the Gaussian sampling module 222 may generate a set of training data samples which are input into the finite element model of the equipment component 234 to generate a set of Gaussian samples.

In step 306, the polynomial chaos expansion module 223 of the data processing system 200 calculates a set of expansion coefficients for the polynomial chaos expansion. The expansion coefficients express creep stress and strain in the equipment component as a function of operating parameters of the equipment component.

In step 308, the input module 216 of the data processing system 200 receives operating parameters of the equipment component. The operating parameters of the equipment component may be the operating temperature and pressure of the equipment component and may be received from the temperature sensor 110 and the pressure sensor 120 respectively. As shown in FIG.2, the operating parameters 240 comprising the temperature 242 and pressure 244 are stored in the data storage 230. It is noted that the operating parameters 240 may be processed in real time or near real time as they are received from the respective sensors.

In step 310, the probability of failure calculation module 224 of the data processing system 200 calculates a probability of failure of the equipment component using the operating parameters 240 received in step 308 and the polynomial chaos expansion coefficients calculated in step 306. The probability of failure may be calculated as a probability density function (PDF). The probability density function 260 may be stored in the data storage 230.

In step 312, the remaining lifetime estimation module 225 calculates a remaining lifetime estimate 262 for the equipment component. The remaining lifetime estimate 262 is calculated from the probability density function 260 calculated in step 310.

In some embodiments, acoustic emission data 250 is captured by the acoustic emission sensor 130 and stored in the data storage 230. The acoustic emission data 250 may be used to confirm the results of the prognostic model. The acoustic emission data 250 is correlated with fracture mechanics and strain properties as well as the response of the material. The correlation between the acoustic emission parameters with strain values may be deduced to determine the level of damage. This level of damage may be compared with predetermined damage limits.

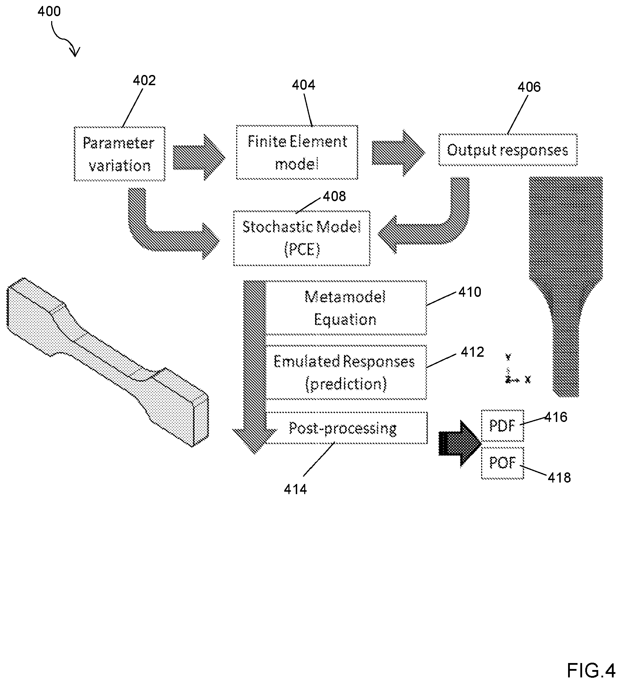

FIG.4 is a process flow diagram showing a method of calculating a probability density function and a probability of failure according to an embodiment of the present invention. The process flow 400 shown in FIG.4 may be carried out by the data processing system 200 shown in FIG.2.

The process 400 takes parameter variation 402 as input. The parameter variation 402 comprises to material properties, material models (such as elasticity model, creep model and plasticity model), fracture mechanics model, physical dimensions and geometry of the equipment component, loading (such as thermal, pressure, external loading i.e. wind, etc...), and boundary conditions. The parameter variation 402 are considered as input of the finite element model 404.

The finite element model 404 relates to computational modelling based on finite element method as basis for physical model of the particular equipment component. Parameter variation 402 are defined in the finite element model. Output responses 406 of the finite element model are computed by solving the governing equations related to the physical model.

The output response 406 are the computed solution by finite element model 404. The output responses 406 includes stress distribution, strain inclusive elasticity, plasticity and creep strain, fracture mechanical response such as crack length and depth.

The output responses 406 and the parameter variation 402 are input into a stochastic model 408. The stochastic model 408 is based on probabilistic model such as Polynomial Chaos Expansion (PCE) algorithm, Particle Filter, Monte Carlo simulation, Markov Chain, etc. The formulation is Polynomial Chaos Expansion is similar as Taylor series expansion, but with different order polynomial function. It is governed by several stochastic coefficients that are calculated from data sampling (that have been generated through finite element model 404). The output responses 406 from finite element model 404 are used as inputs to the stochastic model 408.

The PCE employs a metamodel equation 410. PCE employs metamodeling technique based on basis polynomials and linear regression method. The output of creep analysis is obtained from the physical model of finite element analysis. The model accounts for interaction of individual random variables and its polynomials as a convergent Taylor series.

Emulated responses 412 are generated from the metamodel equation 410. With the variation in operating parameters, polynomial and linear regression method are used to deduce the expansion coefficients and hence the metamodeling equation can be used to emulate the response behavior of the equipment instantaneously.

Post processing 414 is carried out on the emulated responses 412 to generate a probability density function (PDF) 416 and a probability of failure (POF) 418. The prediction of remaining life of the structures (responses) are presented in statistical form of probability density function (PDF) 416 and subsequently probability of failure (POF) 418. The POF 418 can be determined for any key parameters that can be modelled as a random process. In this particular case, the POF 418 is established with regards to the combination of elasticity, plasticity and creep behavior, as well as fracture mechanical response of the equipment component.

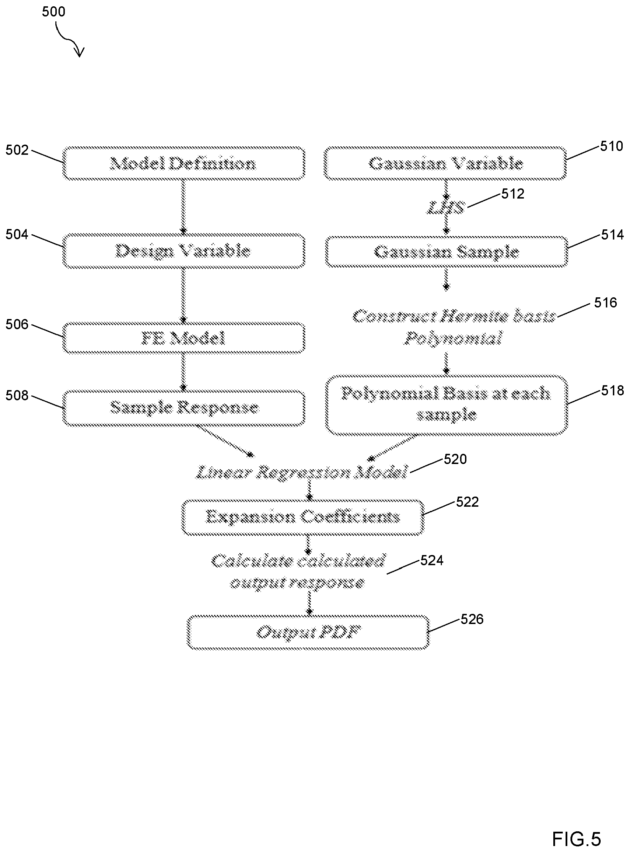

FIG.5 is a flow chart showing a method of generating a probability density function according to an embodiment of the present invention. The method 500 shown in FIG.5 is carried out by the data processing system 200 shown in FIG.2. The method 500 shows the development framework of meta model an equipment failure and lifetime prognostic based on PCE formulation.

The method 500 takes a model definition 502 as input. The model definition 502, which may also be referred to as the device parameters, comprises a definition of the mechanical problem (i.e. strain inclusive elasticity, plasticity and creep strain, fracture mechanic response such as crack length and depth) of the particular equipment component. Design variable 504 which comprises material properties, physical dimension of the equipment, loading (i.e. thermal, pressure, external loading i.e. wind, etc...), and boundary condition of the equipment component is also an input to the method.

The model definition 502 and the design variable 504 are used to generate a finite element model 506. The finite element (FE) model 506 is a computational modelling based on finite element method as basis for physic model for creep problem of particular equipment component. Parameter variations are defined in the model. An output response (e.g. strain inclusive elasticity, plasticity and creep strain, fracture mechanic response such as crack length and depth) is computed by solving the governing equations related to the physic model.

A sample response 508 is generated from the finite element model 506. From the finite element model 506, training data samples are generated based on parameter sensitivity and required polynomial order. The order of stochastic model is related to number random variables in the model.

As shown on the right hand side of FIG.5, sampling is carried out using Gaussian variables 510. The formulation of a stochastic model is based on the assumption that the random variables are Gaussian. For Gaussian variables 510, only lower terms (of expansion coefficients) are included in the PCE.

The Gaussian variables are input into a Latin Hypercube Sampling (LHS) 512 algorithm. LHS is employed to provide an efficient approach for sampling. Without LHS, a large number of samples data may be required to achieve global accuracy in the approximation and this could be major drawback if higher dimensions of random variables are involved.

The output of the LHS 512 is are Gaussian samples 514. In disclosure, it is assumed a Gaussian distribution and hence Hermite polynomials are used for PCE formulation for computing linear regression. Using the Gaussian samples 514, a Hermite basis polynomial is constructed 516. A polynomial basis at each sample 518 is constructed. Hermite polynomials are a classical orthogonal polynomial sequence with respect to the probability density function. For each Gaussian sample 514, Hermite Polynomial is used to represent these variables.

Following the expression of variables in orthogonal polynomial sequence, a linear regression model 520 is used to fitting on series of computed test data for unknown expansion coefficients. The purpose of linear regression analysis is to provide functional relationships between two or more input random variables.

The fitted linear regression model 520 is represented by expansion coefficients 522. For PCE, only lower terms are included. The simultaneous linear equations for expansion coefficients are solved to give the calculated output response 524 based on strain criteria/creep stage threshold.

For each data sample, a probability density function (PDF) 526 is continuously calculated, to emulate the response behavior of the equipment component. For the creep problem, a PDF of every Gaussian sample is generated, reflecting the damage stage (pre-defined based on strain inclusive elasticity, plasticity and creep strain, fracture mechanic response such as crack length and depth criteria).

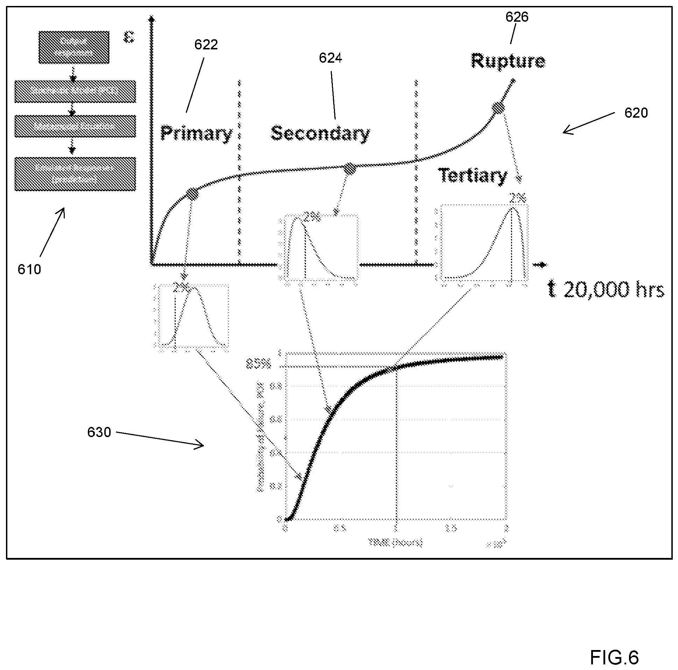

FIG.6 shows graphs of a probability density function and a probability of failure calculated according to embodiments of the present invention. As shown in FIG.6, as the Prognostic meta model is developed 610, with the variation of operational output response from the sensors (temperature, pressure, AE), PDF 620 is recalculated at each data points with regard to creep properties (curve/stage - primary 622, secondary 624 and tertiary 626). Subsequently, probability of failure 630 of the equipment is deduced over the period of time, based on the predefined threshold.

Polynomial Chaos Expansion (PCE) provides an alternative method for probabilistic analysis such that polynomial based stochastic spaces represent the operating parameters (i.e. temperature and pressure). PCE employs metamodeling technique based on basis polynomials and linear regression method to determine the creep responses instantaneously. Unlike conventional Monte Carlo method, PCE capable of predicting the creep damage responses using a fewer set of data at a high level of accuracy.

Embodiments of the present invention may combine acoustic emission (AE) sensors with bespoke data acquisition integrated waveform filtering algorithms and feature analytics for interpreting induced waveform signals from high temperature field at plants. Correlation with AE signal features, including amplitude, duration and counts, with crack initiation and propagation stages within SS304 material of HCFE is achieved with statistical and probabilistic analysis of RMS, Kurtosis and wavelet transform. Critically, this diagnostic system is obliged to meet Zone 1 intrinsically safe requirement, and simultaneously to operate at high temperature reaching 700 degrees C. A specially built enclosure unit to house waveguides, sensors and electronic instruments in a continuous air-cooling circulation may be provided. In addition, infrastructure support for online data transmission for online visualisation by plant operators may also be provided.

As the system signifies any crack occurrences during production, unplanned shutdown could be avoided. Results from analysis for early crack detection indicatively trigger the notification for potential through-crack, eliminating any Loss of Primary Containment (LOPC) to environment. In-situ data on material condition and processing parameters would assist in more accurate life assessment and reliability analysis of specific equipment lifespan.

Recently, AE technique has only been utilised for detection of weld defects mostly in fatigue loadings. Several literature findings on AE research principally indicate its extents as non-destructive testing (NDT) inspection tool, off-line assessment at ambient temperature. Limitation in sensor operating temperature and big data analysis inhibits the progress of the technology. The breakthrough in this research for online crack detection at high field temperature has yet to be reported elsewhere but proved decisive in future life assessment estimate.

The current research coupled probabilistic analysis with Finite Element (FE)/actual data to predict the creep damages of HCFE equipment. The conventional method like Fit For Service (FFS) and statistical method (Monte Carlo) use conservative assumption and first order principles based on the historical data available from the site. The life expectancy of an equipment is deduced based on pure assumption rather than the actual value (predicted responses). Furthermore, the conventional statistical method such as Monte Carlo requires large amount of data to enable accurate prediction of the future event like creep damages.

Polynomial Chaos Expansion (PCE) provides an alternative method for probabilistic analysis such that the operating parameters (i.e. temperature and pressure) are represented by polynomial based stochastic spaces. PCE employs metamodeling technique based on basis polynomials and linear regression method to determine the creep responses instantaneously. Unlike conventional Monte Carlo method, PCE capable to predict the creep damage responses using fewer set of data at high level of accuracy.

The probabilistic creep analysis using PCE enable an accurate prediction at specific level of confidence 95% - 99% confidence level, as the prediction is based on actual operating parameter variations in comparison with conventional FFS method. PCE capable to produce rapid or life prediction when coupled with actual data from sensor attached to the equipment. Being able to produce such prediction leads to improve productivity and safety on site as the state of an equipment is known whilst supported by actual values rather than assumptions. Previous work on probabilistic analysis for critical equipment like HCFE is only limited to reliability model which based on certain target reliability and historical data.

The PCE, coupled with the capability of FE modelling allows for rapid prediction of the equipment behaviour under creep loading. The remaining life of equipment due to creep loading is calculated statistically in the form of probability density function (PDF) and subsequently, the probability of failure (POF). The POF of the response of interest (i.e. creep strain and stress components) can be determined for any key parameters (i.e. operating temperature and pressure) that can be modelled as a random process. Hence, the remaining life of any critical equipment can be predicted using the actual statistical data rather than a pure assumption on the operating condition. The PCE also allowed for assessment of the key parameter interactions which can be established numerically.

The PCE formulation is based on the Taylor series expansion consists of lower and higher-order components and different order of polynomial basis function. It is governed by several stochastic coefficients that need to be determined from data sampling (generated from Finite Element Analysis). Unlike the conventional MCS method, PCE requires less number of sampling to establish the metamodel equation (for the response of interest) which contributed to better efficiency as the sampling data is generated via finite element creep analysis in mathematical modelling software such as ABAQUS.

The formulation of PCE for any order of polynomial basis is given by:

$$u(\theta) = a_0 \Gamma_0 + \sum_{1}^{\infty} a_{i1} \Gamma_1(\zeta_{i1}(\theta)) + \sum_{i1=1}^{\infty} \sum_{i2=1}^{i1} a_{i1i2} \Gamma_2[\zeta_{i1}(\theta), \zeta_{i2}(\theta)] +$$

$$\sum_{i1=1}^{\infty} \sum_{i2=1}^{i1} \sum_{i3=1}^{i2} a_{i1i2i3} \Gamma_3[\zeta_{i1}(\theta), \zeta_{i2}(\theta), \zeta_{i3}(\theta)] + \ldots$$

or

$$u(\theta) = \sum_{i=0}^{\infty} \beta_i \psi_i(\zeta(\theta)),$$

where

$u(\theta)$ is the response of interest,

$\{\zeta_{i1}(\theta)\}_1^{\infty}$ are independent random variables,

$\Gamma_p[\zeta_{i1}(\theta), \ldots, \zeta_{ip}(\theta)]$ are multi-dimensional orthogonal polynomials of order p, $a_{i1}, \ldots, a_{ip}$ are deterministic expansion coefficient, and

$\theta$ is a random quantity.

As described above, embodiments of the present invention allow real-time or near real time data processing. The key to this is the use of PCE (Polynomial Chaos Expansion) analysis which allows variables such as stress and strain to be modelled as a function of measured parameters. The damage to the device can then be modelled as dependent on stress and strain

Using the methodology set out above, failure probability can be calculated and remaining lifetime estimated for damage mechanisms such as mechanical fatigue due to thermal cycles, vibrations, pre-defined displacement cycles, and mixing flow in tee junctions. The methodology can also be applied for mechanical damage due to corrosions to all equipment and piping as stated above.

Whilst the foregoing description has described exemplary embodiments, it will be understood by those skilled in the art that many variations of the embodiments can be made within the scope of the present invention as claimed.

**Claims**

1.   A method (300) of calculating a probability of failure of an equipment component (100), the method (300) comprising:

generating (302) a finite element model (234; 404) of the equipment component (100) using device properties (232) of the equipment component (100);
using the finite element model (234; 404) of the equipment component (100) to construct (304) a polynomial basis for a polynomial chaos expansion;
calculating (306) expansion coefficients (236) for the polynomial chaos expansion which express creep stress and strain in the equipment component as a function of operating parameters of the equipment component (100);
receiving (308) measured operating parameter values (240) for the equipment component (100); and
calculating (310) a probability of failure of the equipment component using the measured operating parameter values (240) and the expansion coefficients (236) for the polynomial chaos expansion.

2.   A method according to claim 1, wherein calculating (306) a probability of failure of the equipment component comprises calculating a probability density function (260).

3.   A method according to claim 2, further comprising estimating a remaining lifetime (262) of the equipment component using the probability density function (260).

4.   A method according to any preceding claim, wherein the operating parameters (240) of the equipment component (100) comprise temperature (242) and / or pressure (244).

5.   A method according to any preceding claim, wherein the device properties (232) of the equipment component (100) comprise dimensions and / or material properties.

6.   A method according to any preceding claim, further comprising receiving acoustic emission parameters (250) corresponding to the equipment component and determining a correlation between the acoustic emission parameters (250) and strain to deduce a level of damage of the equipment component (100).

7.   A method according to any preceding claim, wherein using the finite element model (234; 404) of the equipment component (100) to construct (304) a polynomial basis for a polynomial chaos expansion comprises generating training data samples using the finite element model (234; 404) of the equipment component (100).

8.   A computer readable medium storing processor executable instructions which when executed on a processor cause the processor to carry out a method according to any one of claims 1 to 7.

9.   A data processing system (200) for calculating a probability of failure of an equipment component (100), the system (200) comprising a processor (210) and a data storage device (220) storing computer program instructions operable to cause the processor to:

Generate (302) a finite element model (234; 404) of the equipment component using device properties (232) of the equipment component (100);
use the finite element model (234; 404) of the equipment component (100) to construct (304) a polynomial basis for a polynomial chaos expansion;
calculate (306) expansion coefficients (236) for the polynomial chaos expansion which express creep stress and strain in the equipment component (100) as a function of operating parameters (240) of the equipment component (100);
receive measured operating parameter values (240) for the equipment component (100); and
calculate (310) a probability of failure of the equipment component (100) using the measured operating parameter values (240) and the expansion coefficients (236) for the polynomial chaos expansion.

10.   A data processing system according to claim 9, wherein the data storage device (220) stores instructions operative by the processor (210) to calculate (310) a probability of failure of the equipment component by calculating a probability density function (260).

11. A data processing system according to claim 10, wherein the data storage device (220) stores instructions operative by the processor (210) to estimate a remaining lifetime of the equipment component (100) using the probability density function (260).

12. A data processing system according to any one of claims 9 to 11, wherein the operating parameters (240) of the equipment component comprise temperature (242) and / or pressure (244).

13. A data processing system according to any one of claims 9 to 12, wherein the device properties (232) of the equipment component (100) comprise dimensions and / or material properties.

14. A data processing system according to any one of claims 9 to 13, wherein the data storage device (220) further stores instructions operative by the processor (210) to receive acoustic emission parameters (250) corresponding to the equipment component and determine a correlation between the acoustic emission parameters (250) and strain to deduce a level of damage of the equipment component (100).

15. A data processing system according to any one of claims 9 to 14, wherein the data storage device (220) further stores instructions operative by the processor (210) to use the finite element model (234; 404) of the equipment component to construct (304) a polynomial basis for a polynomial chaos expansion by generating training data samples using the finite element model (234; 404) of the equipment component (100).

**Patentansprüche**

1. Verfahren (300) zum Berechnen einer Ausfallwahrscheinlichkeit einer Ausrüstungskomponente (100), wobei das Verfahren (300) umfasst:

Erzeugen (302) eines Finite-Elemente-Modells (234; 404) der Ausrüstungskomponente (100) unter Verwendung von Vorrichtungseigenschaften (232) der Ausrüstungskomponente (100);
Verwenden des Finite-Elemente-Modells (234; 404) der Ausrüstungskomponente (100), um eine Polynombasis für eine Polynom-Chaosentwicklung zu erstellen (304);
Berechnen (306) von Entwicklungskoeffizienten (236) für die Polynom-Chaosentwicklung, die eine Kriechspannung und -dehnung in der Ausrüstungskomponente in Abhängigkeit von Betriebsparametern der Ausrüstungskomponente (100) ausdrücken;
Empfangen (308) gemessener Betriebsparameterwerte (240) für die Ausrüstungskomponente (100); und
Berechnen (310) einer Ausfallwahrscheinlichkeit der Ausrüstungskomponente unter Verwendung der gemessenen Betriebsparameterwerte (240) und der Entwicklungskoeffizienten (236) für die Polynom-Chaosentwicklung.

2. Verfahren nach Anspruch 1, wobei Berechnen (306) einer Ausfallwahrscheinlichkeit der Ausrüstungskomponente Berechnen einer Wahrscheinlichkeitsdichtefunktion (260) umfasst.

3. Verfahren nach Anspruch 2, das weiter Schätzen einer verbleibenden Lebensdauer (262) der Ausrüstungskomponente unter Verwendung der Wahrscheinlichkeitsdichtefunktion (260) umfasst.

4. Verfahren nach einem vorstehenden Anspruch, wobei die Betriebsparameter (240) der Ausrüstungskomponente (100) Temperatur (242) und/oder Druck (244) umfassen.

5. Verfahren nach einem vorstehenden Anspruch, wobei die Vorrichtungseigenschaften (232) der Ausrüstungskomponente (100) Abmessungen und/oder Materialeigenschaften umfassen.

6. Verfahren nach einem vorstehenden Anspruch, das weiter Empfangen von Schallemissionsparametern (250) entsprechend der Ausrüstungskomponente und Bestimmen einer Korrelation zwischen den Schallemissionsparametern (250) und Dehnung umfasst, um einen Beschädigungsgrad der Ausrüstungskomponente (100) abzuleiten.

7. Verfahren nach einem vorstehenden Anspruch, wobei Verwenden des Finite-Elemente-Modells (234; 404) der Ausrüstungskomponente (100), um eine Polynombasis für eine Polynom-Chaosentwicklung zu erstellen (304), Erzeugen von Trainingsdatenproben unter Verwendung des Finite-Elemente-Modells (234; 404) der Ausrüstungskomponente (100) umfasst.

8. Computerlesbares Medium, das von einem Prozessor ausführbare Anweisungen speichert, die, wenn sie auf einem Prozessor ausgeführt werden, den Prozessor veranlassen, ein Verfahren nach einem der Ansprüche 1 bis 7 auszuführen.

9. Datenverarbeitungssystem (200) zum Berechnen einer Ausfallwahrscheinlichkeit einer Ausrüstungskomponente (100), wobei das System (200) einen Prozessor (210) und eine Datenspeichervorrichtung (220) umfasst, die Computerprogrammanweisungen speichert, die betriebsfähig sind, um den Prozessor zu veranlassen:

ein Finite-Elemente-Modell (234; 404) der Ausrüstungskomponente unter Verwendung von Vorrichtungseigenschaften (232) der Ausrüstungskomponente (100) zu erzeugen (302);
das Finite-Elemente-Modell (234; 404) der Ausrüstungskomponente (100) zu verwenden, um eine Polynombasis für eine Polynom-Chaosentwicklung zu erstellen (304);
Entwicklungskoeffizienten (236) für die Polynom-Chaosentwicklung zu berechnen (306), die eine Kriechspannung und -dehnung in der Ausrüstungskomponente (100) in Abhängigkeit von Betriebsparametern (240) der Ausrüstungskomponente (100) ausdrücken;
gemessene Betriebsparameterwerte (240) für die Ausrüstungskomponente (100) zu empfangen; und
eine Ausfallwahrscheinlichkeit der Ausrüstungskomponente (100) unter Verwendung der gemessenen Betriebsparameterwerte (240) und der Entwicklungskoeffizienten (236) für die Polynom-Chaosentwicklung zu berechnen (310).

10. Datenverarbeitungssystem nach Anspruch 9, wobei die Datenspeichervorrichtung (220) Anweisungen speichert, die vom Prozessor (210) ausgeführt werden können, um eine Ausfallwahrscheinlichkeit der Ausrüstungskomponente durch Berechnen einer Wahrscheinlichkeitsdichtefunktion (260) zu berechnen (310).

11. Datenverarbeitungssystem nach Anspruch 10, wobei die Datenspeichervorrichtung (220) Anweisungen speichert, die vom Prozessor (210) ausgeführt werden können, um eine verbleibende Lebensdauer der Ausrüstungskomponente (100) unter Verwendung der Wahrscheinlichkeitsdichtefunktion (260) zu schätzen.

12. Datenverarbeitungssystem nach einem der Ansprüche 9 bis 11, wobei die Betriebsparameter (240) der Ausrüstungskomponente Temperatur (242) und/oder Druck (244) umfassen.

13. Datenverarbeitungssystem nach einem der Ansprüche 9 bis 12, wobei die Vorrichtungseigenschaften (232) der Ausrüstungskomponente (100) Abmessungen und/oder Materialeigenschaften umfassen.

14. Datenverarbeitungssystem nach einem der Ansprüche 9 bis 13, wobei die Datenspeichervorrichtung (220) weiter Anweisungen speichert, die vom Prozessor (210) ausgeführt werden können, um Schallemissionsparameter (250) entsprechend der Ausrüstungskomponente zu empfangen und eine Korrelation zwischen den Schallemissionsparametern (250) und Dehnung zu bestimmen, um einen Beschädigungsgrad der Ausrüstungskomponente (100) abzuleiten.

15. Datenverarbeitungssystem nach einem der Ansprüche 9 bis 14, wobei die Datenspeichervorrichtung (220) weiter Anweisungen speichert, die vom Prozessor (210) ausgeführt werden können, um das Finite-Elemente-Modell (234; 404) der Ausrüstungskomponente zu verwenden, um eine Polynombasis für eine Polynom-Chaosentwicklung durch Erzeugen von Trainingsdatenproben unter Verwendung des Finite-Elemente-Modells (234; 404) der Ausrüstungskomponente (100) zu erstellen (304).

**Revendications**

1. Procédé (300) de calcul d'une probabilité de défaillance d'un composant d'équipement (100), le procédé (300) comprenant :

la génération (302) d'un modèle d'éléments finis (234; 404) du composant d'équipement (100) à l'aide de propriétés de dispositif (232) du composant d'équipement (100) ;
l'utilisation du modèle d'éléments finis (234; 404) du composant d'équipement (100) pour construire (304) une base polynomiale destinée à un développement en chaos polynomial ;

le calcul (306) de coefficients de développement (236) pour le développement en chaos polynomial qui expriment une contrainte et une déformation de fluage dans le composant d'équipement en fonction de paramètres de fonctionnement du composant d'équipement (100) ;

la réception (308) de valeurs de paramètres de fonctionnement mesurées (240) pour le composant d'équipement (100) ; et

le calcul (310) d'une probabilité de défaillance du composant d'équipement à l'aide des valeurs de paramètres de fonctionnement mesurées (240) et des coefficients de développement (236) pour le développement en chaos polynomial.

2.  Procédé selon la revendication 1, dans lequel le calcul (306) d'une probabilité de défaillance du composant d'équipement comprend le calcul d'une fonction de densité de probabilité (260).

3.  Procédé selon la revendication 2, comprenant en outre l'estimation de la durée de vie résiduelle (262) du composant d'équipement à l'aide de la fonction de densité de probabilité (260).

4.  Procédé selon une quelconque revendication précédente, dans lequel les paramètres de fonctionnement (240) du composant d'équipement (100) comprennent la température (242) et/ou la pression (244).

5.  Procédé selon une quelconque revendication précédente, dans lequel les propriétés de dispositif (232) du composant d'équipement (100) comprennent des dimensions et/ou des propriétés matérielles.

6.  Procédé selon une quelconque revendication précédente, comprenant en outre la réception de paramètres d'émission acoustique (250) correspondant au composant d'équipement et la détermination d'une corrélation entre les paramètres d'émission acoustique (250) et la déformation pour déduire un niveau d'endommagement du composant d'équipement (100).

7.  Procédé selon une quelconque revendication précédente, dans lequel l'utilisation du modèle d'éléments finis (234 ; 404) du composant d'équipement (100) pour construire (304) une base polynomiale destinée à un développement en chaos polynomial comprend la génération d'échantillons de données d'entraînement à l'aide du modèle d'éléments finis (234 ; 404) du composant d'équipement (100).

8.  Support lisible par ordinateur stockant des instructions exécutables par processeur qui, lorsqu'elles sont exécutées sur un processeur, amènent le processeur à réaliser un procédé selon l'une quelconque des revendications 1 à 7.

9.  Système de traitement de données (200) pour calculer une probabilité de défaillance d'un composant d'équipement (100), le système (200) comprenant un processeur (210) et un dispositif de stockage de données (220) stockant des instructions de programme informatique pouvant être utilisées pour amener le processeur à :

    générer (302) un modèle d'éléments finis (234 ; 404) du composant d'équipement à l'aide de propriétés de dispositif (232) du composant d'équipement (100) ;

    utiliser le modèle d'éléments finis (234 ; 404) du composant d'équipement (100) pour construire (304) une base polynomiale destinée à un développement en chaos polynomial ;

    calculer (306) des coefficients de développement (236) pour le développement en chaos polynomial qui expriment une contrainte et une déformation de fluage dans le composant d'équipement (100) en fonction de paramètres de fonctionnement (240) du composant d'équipement (100) ;

    recevoir des valeurs de paramètre de fonctionnement mesurées (240) pour le composant d'équipement (100) ; et

    calculer (310) une probabilité de défaillance du composant d'équipement (100) à l'aide des valeurs de paramètre de fonctionnement mesurées (240) et des coefficients de développement (236) pour le développement en chaos polynomial.

10. Système de traitement de données selon la revendication 9, dans lequel le dispositif de stockage de données (220) stocke des instructions pouvant être utilisées par le processeur (210) pour calculer (310) une probabilité de défaillance du composant d'équipement en calculant une fonction de densité de probabilité (260).

11. Système de traitement de données selon la revendication 10, dans lequel le dispositif de stockage de données (220) stocke les instructions pouvant être utilisées par le processeur (210) pour estimer la durée de vie résiduelle du composant d'équipement (100) à l'aide de la fonction de densité de probabilité (260).

**12.** Système de traitement de données selon l'une quelconque des revendications 9 à 11, dans lequel les paramètres de fonctionnement (240) du composant d'équipement comprennent la température (242) et/ou la pression (244).

**13.** Système de traitement de données selon l'une quelconque des revendications 9 à 12, dans lequel les propriétés de dispositif (232) du composant d'équipement (100) comprennent des dimensions et/ou des propriétés matérielles.

**14.** Système de traitement de données selon l'une quelconque des revendications 9 à 13, dans lequel le dispositif de stockage de données (220) stocke en outre des instructions pouvant être utilisées par le processeur (210) pour recevoir des paramètres d'émission acoustique (250) correspondant au composant d'équipement et déterminer une corrélation entre les paramètres d'émission acoustique (250) et la déformation afin de déduire un niveau d'endommagement du composant d'équipement (100).

**15.** Système de traitement de données selon l'une quelconque des revendications 9 à 14, dans lequel le dispositif de stockage de données (220) stocke en outre des instructions pouvant être utilisées par le processeur (210) pour utiliser le modèle d'éléments finis (234 ; 404) du composant d'équipement pour construire (304) une base polynomiale destinée à un développement en chaos polynomial en générant des échantillons de données d'entraînement à l'aide du modèle d'éléments finis (234 ; 404) du composant d'équipement (100).

FIG.1

FIG.2

300

Generate finite element model of equipment component — 302

↓

Construct polynomial basis for PCE — 304

↓

Calculate expansion coefficients — 306

↓

Receive measured operating parameter values — 308

↓

Calculate probability of failure of equipment component — 310

↓

Estimate remaining lifetime of equipment component — 312

FIG.3

FIG.4

500

| 502 — | Model Definition | | 510 — | Gaussian Variable |
| 504 — | Design Variable | | 512 — | *LHS* |
| 506 — | FE Model | | 514 — | Gaussian Sample |
| 508 — | Sample Response | | 516 — | *Construct Hermite basis Polynomial* |
| | | | 518 — | Polynomial Basis at each sample |

520 — *Linear Regression Model*

522 — Expansion Coefficients

524 — *Calculate calculated output response*

526 — *Output PDF*

FIG.5

FIG.6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016246287 A

**Non-patent literature cited in the description**

- **B. SUDRET**. Chapter 6: Polynomial chaos expansions and stochastic finite-element methods. *Risk and Reliability in Geotechnical Engineering*, 30 November 2014